# EUROPÄISCHE PATENTSCHRIFT

(11) **EP 2 258 531 B1**
(45) Veröffentlichungstag und Bekanntmachung des Hinweises auf die Patenterteilung: **05.10.2011**
(21) Anmeldenummer: 10005503.7
(22) Anmeldetag: 27.05.2010
(51) Int. Cl.: B29C 45/00, B29C 45/04, B29C 45/16

(54) **Spritzgießmaschine**
Injection moulding machine
Machine de moulage par injection

(30) Priorität: 03.06.2009 DE 102009023719
(43) Veröffentlichungstag der Anmeldung: 08.12.2010
(73) Patentinhaber: Zahoransky Formenbau GmbH, 79108 Freiburg (DE)
(72) Erfinder: Steinebrunner, Timo, 79423 Heitersheim (DE); Matt, Markus, 79331 Teningen (DE)
(74) Vertreter: Maucher, Wolfgang

(56) Entgegenhaltungen:
- EP-A1- 1 892 074
- WO-A2-2004/103676

## Beschreibung

Die Erfindung bezieht sich auf eine Spritzgießmaschine mit einem Etagenwerkzeug zum Herstellen von Spritzlingen, das ein festes Außenformteil, einen dreh- oder schwenkbar gelagerten Mittelblock sowie ein bewegliches Außenformteil aufweist, wobei Formhöhlungen zwischen Formgebungsbereichen an den Innenseiten der Außenformteile und Formgebungsbereichen an gegenüberliegenden Außenseiten des Mittelblocks gebildet sind.

Solche Etagenwerkzeuge sind in zahlreichen Ausführungen bekannt, um beispielsweise in zwei Ebenen auf einer einzigen Spritzgießmaschine die doppelte Anzahl von Spritzlingen zu produzieren. Bei einer Weiterentwicklung dieser Etagenwerkzeuge ist der Mittelblock drehbar, so dass auf einer Spritzgießmaschine ein Zwei-Komponenten-Spritzling gefertigt werden kann, indem zunächst in einer Ebene ein Vorspritzling gespritzt wird, der Mittelblock oder ein Teil dessen mit dem Vorspritzling in die andere Ebene gedreht wird und dort fertig gespritzt wird. Solche Würfelwerkzeuge sind beispielsweise aus der DE 101 21 691 A1 bekannt. Man kennt auch bereits Spritzgießmaschinen mit einem Doppelwürfel, beispielsweise aus der WO 2005/077637 A1 oder der US 7081222 B2, bei denen auf zwei nebeneinander angeordneten Mittelblöcken zwei Teil-Spritzlinge gefertigt werden, die dann nach dem Drehen der Mittelblöcke zueinander gewandt sind und durch die Schließbewegung des Etagenwerkzeugs miteinander verbunden werden.

Problematisch bei diesen vorbekannten Spritzgießmaschinen ist jedoch, dass sie konstruktiv aufwändig sind durch die zwei Drehantriebe für die beiden Mittelblöcke und die erforderlichen Mediendurchführungen sowie die Vorrichtungen zur Linearverschiebung der beiden Mittelblöcke zueinander. Zudem hat eine solche Spritzgießeinrichtung eine große Bauhöhe und es müssen im geöffneten Zustand die Drehkreise beider Mittelblöcke berücksichtigt werden. Darüber hinaus eignen sich solche Spritzgießeinrichtungen nur für Spritzlinge, die in ihrer Lage innerhalb der Formhöhlung miteinander verbunden werden sollen, beispielsweise für Halbkugeln als Teil-Spritzlinge, die zu einer geschlossenen Kugel zusammengefügt werden.

Aus der DE 10 2006 024 481 A1 kennt man eine Vorrichtung mit zwei äußeren Formaufspannplatten und einem mittleren drehbaren Formträgerelement, die jeweils Formhälften aufweisen, die in einer geschlossenen Stellung Formhöhlungen für unterschiedliche Formteile bilden. An den äußeren Formaufspannplatten ist jeweils ein Schiebetisch mit jeweils zumindest zwei Formhälften vorgesehen. Durch eine Längsverschiebung ist jeweils eine der Formhälften eines Schiebetisches in den korrespondierenden Bereich der Formhälfte des mittleren Formträgerelementes bringbar. Dadurch können zwei Formteile gleichzeitig gespritzt werden, während die jeweils freien Formhälften der Schiebetische gereinigt oder mit Trennmittel beschichtet werden. Dadurch kann eine schnellere Bearbeitungsgeschwindigkeit erreicht werden. Die Herstellung mehrteiliger Spritzlinge ist mit der Vorrichtung gemäß der DE 10 2006 024 481 A1 jedoch nicht vorgesehen.

Die WO 2004/103676 A2 zeigt und beschreibt ein Verfahren und eine Vorrichtung, wobei eine drehbare Formhälfte zwischen zwei äußeren Formhälften angeordnet ist. Die erste äußere Formhälfte sowie die drehbare Formhälfte weisen jeweils Formhöhlungen für zwei Teile auf. In einem ersten Arbeitsschritt werden im Bereich der ersten Formhälfte erste und zweite Spritzteile gespritzt, die nach einer Drehung der drehbaren Formhälfte miteinander verbunden werden, indem eines der Spritzteile entnommen und an das an der drehbaren Formhälfte verbliebene Spritzteil angebracht wird. Nach einer weiteren Drehung des drehbaren Formteils wird eine Anspritzung an das so zusammengesetzte Spritzteil angebracht. Das zweite äußere Formteil weist hierzu eine entsprechende Formhöhlung auf. Mit einer derartigen Vorrichtung können Spritzteile aus drei Komponenten hergestellt werden. Die Vorrichtung ist jedoch sehr aufwändig und damit teuer, da an den Seitenflächen jeweils Formhöhlungen für das erste und das zweite Spritzteil vorgesehen sind.

Es besteht daher die Aufgabe, eine Spritzgießmaschine der eingangs genannt Art zu schaffen, die eine geringe Bauhöhe aufweist, die konstruktiv einfach realisierbar ist und mit der Teil-Spritzlinge auch lagekorrigiert miteinander verbunden werden können oder mit der erste Teil-Spritzlinge mit einer Anspritzung als zweiten Teil-Spritzling versehen werden können.

Die erfindungsgemäße Lösung dieser Aufgabe besteht darin, dass der Mittelblock an zwei in Dreh- oder Schwenkrichtung einander benachbarten Außenflächen Formgebungsbereiche für erste Teil-Spritzlinge und an den beiden anderen, einander benachbarten Außenflächen Formgebungsbereiche für zweite Teil-Spritzlinge aufweist, dass die beiden Außenformteile jeweils Formgebungsbereiche für einen der beiden Teil-Spritzlinge aufweisen, und dass in Dreh- oder Schwenkrichtung versetzt zu den Außenformteilen jeweils wenigstens ein Greifer zum Entnehmen und Halten eines Teil-Spritzlings und zum Positionieren eines zuvor entnommenen ersten Teil-Spritzlings an einem zweiten Teil-Spritzling zur Verbindung mit diesem oder zum Entnehmen und Halten eines Teil-Spritzlings und zum Einsetzen eines zuvor entnommenen ersten Teil-Spritzlings in einen Formgebungsbereich für zweite Teil-Spritzlinge des Mittelblocks vorgesehen ist.

An den beiden Außenformteilen werden in Schließstellung jeweils unterschiedliche Teil-Spritzlinge gefertigt. An dem einen Außenformteil immer ein erster Teil-Spritzling und an dem anderen Außenformteil immer ein zweiter Teil-Spritzling.

Gemäß einer ersten Variante wird zu Beginn des Herstellungsprozesses nur an dem Außenformteil für den ersten Teil-Spritzling gespritzt, ein zweiter Teil-Spritzling wird noch nicht gespritzt. Nach dem Öffnen der Formen wird der Mittelblock um 90° gedreht und die Formen wieder geschlossen, so dass die zuvor außen liegenden Formgebungsbereiche des Mittelblocks mit den Formgebungsbereichen der Außenformteile Formhöhlungen bilden, in denen dann weitere Teil-Spritzlinge gefertigt werden, wobei nach dem ersten Spritzzyklus, in dem wie vorbeschrieben nur an einem der Außenformteile gespritzt wird, an beiden der Außenformteile ein erster oder ein zweiter Teil-Spritzling gespritzt wird.
Die Formgebungsbereiche können insbesondere Kavitäten sein oder eine Kavität beispielsweise am Außenformteil wird durch einen in diese Kavität in Schließstellung hineinragenden Formvorsprung als Formgebungsbereich des Mittelblocks zu einer Formhöhlung ergänzt.

Der zuvor gespritzte erste Teil-Spritzling ist während dem zweiten Spritzvorgang im Bereich eines Greifers angeordnet und wird von diesen entnommen und gehalten. Nach dem zweiten Spritzvorgang wird das Etagenwerkzeug geöffnet und der Mittelblock wird um 90° in die entgegengesetzte Richtung gegenüber dem vorigen Drehvorgang verschwenkt. Somit befindet sich der gerade gespritzte zweite Teil-Spritzling im Bereich des zuvor gespritzten und von dem Greifer gehaltenen ersten Teil-Spritzlings. Durch entsprechende Positionierbewegungen des Greifers kann der erste Teil-Spritzling dem zweiten Teil-Spritzling angenähert und mit diesem Verbunden werden. Je nach Art und Ausgestaltung der Teil-Spritzlinge kann das Verbinden beispielsweise durch eine Rastverbindung und eine entsprechende lineare Positionierbewegung des Greifers erfolgen oder durch einen Bajonettverschluss und eine Drehbewegung des Greifers. Dabei ist es auch möglich, den ersten Teil-Spritzling in seiner Lage oder Ausrichtung zu korrigieren, beispielsweise vor dem Verbinden um 180° zu drehen, so dass die zuvor von dem Mittelblock abgewandte Seite des Teil-Spritzlings dann dem Mittelblock und dem zweiten Teil-Spritzling zugewandt ist. Dazu kann der Greifer beispielsweise an einem Roboterarm, der eine universelle Bewegung erlaubt, gehalten sein. Nach dem Verbinden wird der fertige Spritzling aus dem Formgebungsbereich des Mittelblocks ausgestoßen.

Auf der gegenüberliegenden Seite des Mittelblocks befindet sich der im zweiten Spritz-Zyklus gespritzte erste Teil-Spritzling, der mit einem weiteren Greifer aus seinem Formgebungsbereich des Mittelblocks entnommen und gehalten werden kann.

In der weiteren Bearbeitung wird jeweils abwechselnd auf einer Seite ein erster Teil-Spritzling mit einem der Greifer aus dem Mittelblock entnommen und auf der gegenüberliegenden Seite ein zuvor entnommener erster Teil-Spritzling mit einem zweiten Teil-Spritzling verbunden, während in der geschlossenen Form an den Außenformteilen weitere Teil-Spritzlinge gespritzt werden. Die Dreh- oder Schwenkbewegung des Mittelblocks zwischen den Spritzvorgängen erfolgt oszillierend um jeweils 90° abwechselnd in die eine oder die andere Richtung.

Somit ist es mit der erfindungsgemäßen Spritzgießmaschine möglich, einen aus zwei Teil-Spritzlingen zusammengesetzten Spritzling zu fertigen, wobei die Ausrichtung der beiden Teil-Spritzlinge in Verbindungslage zueinander nicht auf deren Ausrichtung innerhalb des jeweiligen Formgebungsbereichs beim Spritzen beschränkt ist. Zudem ist die Spritzgießmaschine konstruktiv einfach und mit kleiner Baugröße realisierbar. An dem Mittelblock werden insgesamt nur vier Formgebungsbereiche, zwei für jeden Teil-Spritzling, benötigt, gegenüber mindestens sechs Formgebungsbereichen bei vorbekannten Spritzgießmaschinen mit zwei drehbaren Mittelblöcken, wodurch die Herstellung weiter vereinfacht und die Herstellungskosten für die Spritzgießmaschine reduziert sind.

Gemäß einer zweiten Variante wird zu Beginn des Herstellungsprozesses ebenfalls nur an dem Außenformteil für den ersten Teil-Spritzling gespritzt, der einen Vorspritzling bildet. Nach dem Öffnen der Formen wird der Mittelblock ebenfalls um 90° gedreht und die Formen wieder geschlossen, so dass die zuvor außen liegenden Formgebungsbereiche des Mittelblocks mit den Formgebungsbereichen der Außenformteile Formhöhlungen bilden, in denen dann weitere Teil-Spritzlinge gefertigt werden. Entgegen der vorbeschriebenen, ersten Variante wird nun wieder nur ein erster Teil-Spritzling gespritzt.
Der zuvor gespritzte erste Teil-Spritzling ist während dem zweiten Spritzvorgang im Bereich eines Greifers angeordnet und wird von diesen entnommen und gehalten. Nach dem zweiten Spritzvorgang wird das Etagenwerkzeug geöffnet und der Mittelblock wird um 90° in die entgegengesetzte Richtung gegenüber dem vorigen Drehvorgang verschwenkt. Somit befindet sich der im ersten Zyklus gespritzte und von dem Greifer gehaltene erste Teil-Spritzling vor einem Formgebungsbereich für zweite Teil-Spritzlinge. Dieser ist bei dieser Variante zur Aufnahme eines ersten Teil-Spritzlings ausgebildet, der nach dem erneuten Verschwenken des Mittelblocks im Bereich des Außenformteils für einen zweiten Teil-Spritzling angeordnet ist. Bei geschlossener Form wird dann der zweite Teil-Spritzling an den ersten Teil-Spritzling, der sich in der durch die Formgebungsbereiche des entsprechenden Außenformteils und des Mittelblocks gebildeten Formhöhlung befindet, angespritzt, wodurch ohne zusätzliche Montage ein zweiteilger Fertigspritzling gebildet ist.
Dieser Fertigspritzling kann nach dem Öffnen der Form und einem weiteren Verschwenken des Mittelblocks ausgestoßen oder mit dem Greifer aus dem Formgebungsbereich des Mittelblocks entnommen werden.

Der nach dem ersten Verschwenken des Mittelblocks gespritzte erste Teil-Spritzling befindet sich während dem Anspritzen des zweiten Teil-Spritzlings an den zuerst gespritzten ersten Teil-Spritzling an der dem ersten Greifer gegenüberliegenden Seite des Mittelblocks und kann mit einem weiteren Greifer aus seinem Formgebungsbereich des Mittelblocks entnommen und gehalten werden.

In der weiteren Bearbeitung wird jeweils abwechselnd auf einer Seite ein erster Teil-Spritzling mit einem der Greifer aus dem Mittelblock entnommen und auf der gegenüberliegenden Seite ein Fertigspritzling, bestehnd aus erstem Teil-Spritzling und angespritzem zweiten Teil-Spritzling, entnommen, während in der geschlossenen Form an den Außenformteilen weitere erste Teil-Spritzlinge gespritzt und an dem gegenüberliegenden Außenformteil mit dem zweiten Teil-Spritzling umspritzt werden. Die Dreh- oder Schwenkbewegung des Mittelblocks zwischen den Spritzvorgängen erfolgt auch hier oszillierend um jeweils 90° abwechselnd in die eine oder die andere Richtung.

Somit ist es auf einfache und schnelle Weise möglich, Spritzlinge aus zwei durch An- oder Umspritzen eines ersten Teil-Spritzlings gebildeten Spritzkomponenten herzustellen. Insbesondere können zweifarbige Spritzlinge oder Spritzlinge aus zwei unterschiedlichen Materialien hergestellt werden.

In dem Arbeits-Zyklus, in dem ein erster Teil-Spritzling in dem Greifer gehalten ist, kann dieser Teil-Spritzling noch bearbeitet, beispielsweise gekühlt oder mit ionisierter Luft beaufschlagt werden. Es ist auch möglich, an dem Teil-Spritzling ein weiteres Teil anzubringen, das dann beim Anspritzen des zweiten Teil-Spritzlings beispielsweise bereichsweise umspritzt und dadurch fixiert wird.

Je nach Art der Teil-Spritzlinge können diese bei der ersten Variante wie vorbeschrieben mechanisch miteinander verbunden werden, beispielsweise durch Verrasten oder einen Bajonettverschluss und eine Drehbewegung. Die Greifer können dazu entsprechend positionierbar sein, beispielsweise über einen Roboterarm.

Falls andere Verbindungstechniken erforderlich oder gewünscht sind, kann eine Verbindungs-Vorrichtung zum Verbinden der beiden miteinander zu verbindenden Teil-Spritzlinge vorgesehen sein.

Die Verbindungs-Vorrichtung kann beispielsweise zum Einbringen von Klebstoff in den Verbindungsbereich zwischen den beiden miteinander zu verbindenden Teil-Spritzlingen ausgebildet sein.

Alternativ kann die Verbindungs-Vorrichtung zum Verschweißen der beiden miteinander zu verbindenden Teil-Spritzlingen ausgebildet sein. Beispielsweise können die Teil-Spritzlinge durch Spiegelschweißen miteinander verbunden werden.

Eine weitere Ausgestaltung der Erfindung sieht vor, dass eine Zuführeinrichtung zum Zuführen eines beim Verbinden der beiden Teil-Spritzlinge miteinander mit den Teil-Spritzlingen verbindbaren oder an diesen gehaltenen Zusatzelementes vorgesehen ist. Beispielsweise kann der erste Teil-Spritzling der Schild eines Schnullers und der zweite Teil-Spritzling die zugehörige Abdeckkappe, beispielsweise mit Öse für eine Befestigungsschnur sein, zwischen die das Schnuller-Mundteil aus Latex oder Kautschuk als Zusatzelement eingesetzt und an diesen durch das Verbinden festgelegt wird.

Um mehrere Spritzlinge gleichzeitig fertigen zu können ist es vorteilhaft, wenn an jeder der Außenflächen des Mittelblocks jeweils mehrere, in Querrichtung zur Drehachse des Mittelblocks nebeneinander angeordnete Formgebungsbereiche für einen der beiden Teil-Spritzlinge sowie an den beiden Außenformteilen entsprechende, nebeneinander angeordnete Formgebungsbereiche vorgesehen sind. Somit können gleichzeitig mehrere Teil-Spritzlinge gefertigt beziehungsweise miteinander zu einem Spritzling verbunden werden, so dass die Produktionsleistung der Spritzgießmaschine erhöht ist. Zum Entnehmen und Halten der nebeneinander angeordneten Teil-Spritzlinge ist dabei jeweils ein eigener Greifer vorgesehen.

Des Weiteren können mehrere, in Richtung der Drehachse des Mittelblocks hintereinander angeordnete Bearbeitungsebenen vorgesehen sein. Die vorbeschriebenen Herstellungsschritte können so parallel und gleichzeitig an den einzelnen Bearbeitungsebenen durchgeführt werden und die Produktionsleistung der Spritzgießmaschine ist weiter erhöht.

Durch Kombination der quer zur Drehachse nebeneinander angeordneten Formgebungsbereiche und der in Richtung der Drehachse hintereinander angeordneten Bearbeitungsebenen ist die Fertigung der Teil-Spritzlinge in einer Matrix-Anordnung möglich, beispielsweise 2x2, also zwei Formgebungsbereiche nebeneinander und zwei übereinander, oder 4x8 usw. Dadurch ist eine hohe Produktionsleistung der Spritzgießmaschine möglich.

Zusätzlich können Prüfeinrichtungen für die aus jeweils zwei Teil-Spritzlingen zusammengesetzten Spritzlinge vorgesehen sein. Es können beispielsweise optische Prüfungen, aber auch physikalische Prüfungen, beispielsweise Durchflussprüfungen von Bohrungen oder Ausnehmungen, vorgenommen werden. Diese Prüfungen können vor dem Ausstoßen des noch mit dem zweiten Teil-Spritzling an dem Mittelblock gehaltenen Spritzlings durchgeführt werden. Dabei ist der Spritzling in einer definierten Lage gehalten, was die Durchführung der Prüfung vereinfacht. Ein erneutes Aufnehmen und Ausrichten des Spritzlings, wie dies nach dem Ausstoßen aus dem Mittelblock erforderlich wäre, ist somit nicht notwendig und die Durchführung der Prüfung schnell und einfach möglich.

Der Antrieb für den Mittelblock wie auch für die Öffen- und Schließbewegung der Form mit Mittelblock und beweglichem Außenformteil kann über bewährte Antriebssysteme erfolgen, insbesondere über Elektromotoren, Hydraulikantriebe, Zahnstangengetriebe usw.

Nachstehend sind Ausführungsbeispiele der erfindungsgemäßen Spritzgießmaschine anhand der Zeichnungen näher erläutert.

Es zeigt in schematischer Darstellung:
- Fig. 1 bis Fig. 3: jeweils eine Aufsicht einer Spritzgießmaschine in verschiedenen Arbeitspositionen,
- Fig. 4: eine Seitenansicht der Spritzgießmaschine aus Figur 1,
- Fig. 5: eine Aufsicht einer zweiten Ausführungsform einer Spritzgießmaschine bei geöffneten Formen,
- Fig. 6: eine Aufsicht der Spritzgießmaschine gemäß Figur 5 bei geschlossenen Formen und
- Fig. 7: eine Seitenansicht der Spritzgießmaschine aus Figur 5.

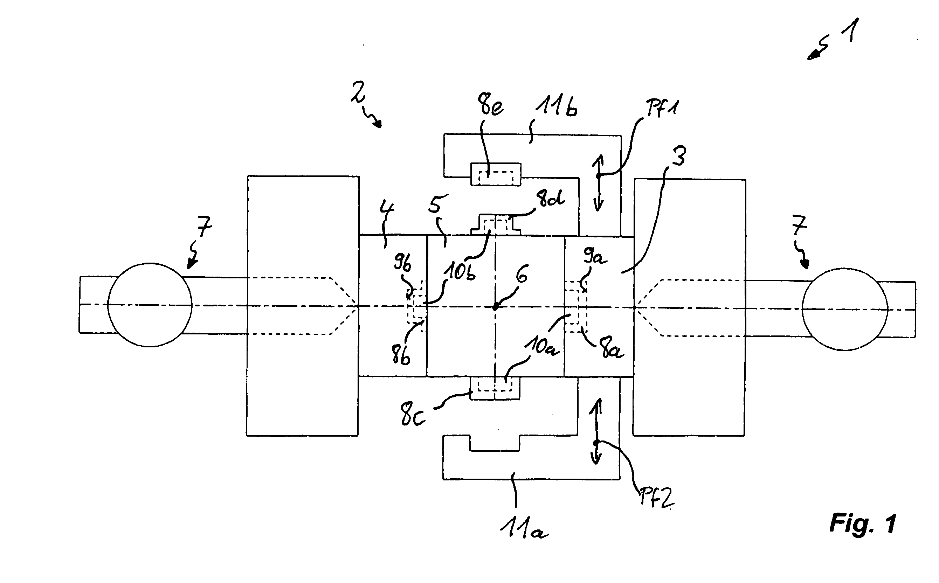

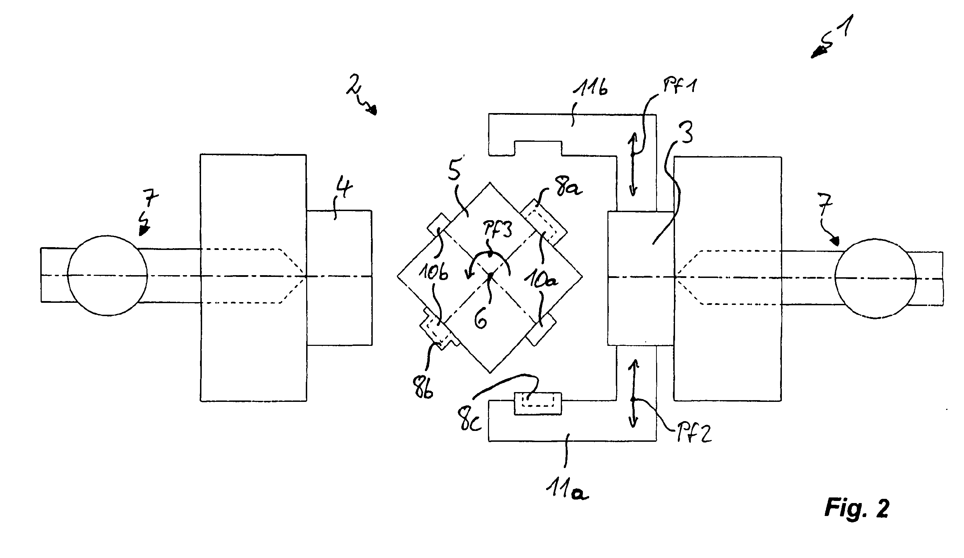

Eine im Ganzen mit 1 bezeichnete Spritzgießmaschine weist gemäß Figuren 1 bis 4 ein Etagenwerkzeug 2 zum Herstellen von Spritzlingen auf. Dabei sind ein festes Außenformteil 3, ein Mittelblock 5 sowie ein bewegliches Außenformteil 4 vorgesehen. Der Mittelblock 5 und das bewegliche Außenformteil 4 sind zwischen einer Schließstellung (Fig. 1, 3, 4) und einer Offenstellung (Fig. 2) linear verschiebbar. In Offenstellung kann der Mittelblock 5 um eine Drehachse 6 verschwenkt werden, wobei ein oszillierendes Verschwenken um jeweils 90° in die eine Richtung und im nächsten Bearbeitungszyklus in die Gegenrichtung zurück vorgesehen sind.

Den Außenformteilen 3, 4 ist jeweils eine Spritzeinrichtung 7 mit nicht näher dargestellten Zuführungen für das Spritzmaterial zum Spritzen von Teil-Spritzlingen 8a, 8b, 8c, 8d, 8e zugeordnet. Das feste Außenformteil 3 weist eine Kavität als Formgebungsbereich 9a für einen ersten Teil-Spritzling und das bewegliche Außenformteil 4 weist eine Kavität als Formgebungsbereich 9b für einen zweiten Teil-Spritzling auf. An dem Mittelblock 5 sind jeweils an zwei einander in Schwenkrichtung benachbarten Außenflächen Formgebungsbereiche 10a für einen ersten Teil-Spritzling und Formgebungsbereiche 10b für einen zweiten Teil-Spritzling vorgesehen, die in Schließstellung mit der Kavität eines Formgebungsbereichs 9a, 9b der Außenformteile 3, 4 eine Formhöhlung bilden.

Im Bereich der in Drehrichtung des Mittelblocks 5 versetzt zu den Außenformteilen 3, 4 angeordneten, außen liegenden, freien Seiten des Mittelblocks 5 ist jeweils ein Greifer 11a, 11b vorgesehen, mit dem jeweils ein erster Teil-Spritzling von dem Mittelblock 5 entnommen und gehalten werden kann.

Bei der in Figur 1 gezeigten Situation wird an dem festen Außenformteil 3 ein erster Teil-Spritzling 8a und an dem beweglichen Außenformteil 4 ein zweiter Teil-Spritzling 8b gespritzt. Ein im vorangegangenen Arbeitszyklus gespritzter erster Teil-Spritzling 8c befindet sich nach einer Drehung des Mittelblocks 5 um 90° in Uhrzeigerrichtung nun im Bereich des in der Figur 1 unteren Greifers 11a und kann von diesem entnommen und gehalten werden (Pfeil Pf2). Der im vorangegangenen Arbeitszyklus am beweglichen Außenformteil 4 gespritzte zweite Teil-Spritzling 8d befindet sich nun im Bereich des in der Figur 1 oberen Greifers 11b. Dieser Greifer 11b hält einen zwei Zyklen zuvor gespritzten und im vorangegangenen Arbeitszyklus von dem Mittelblock 5 entnommenen ersten Teil-Spritzling 8e. Mittels des Greifers 11b kann dieser erste Teil-Spritzling 8e an den zweiten Teil-Spritzling 8d angenähert (Pfeil Pf1) und mit diesem verbunden werden, beispielsweise mechanisch durch Verrasten oder mit Hilfe einer nicht dargestellten Verbindungs-Vorrichtung zum Verschweißen oder Kleben. Der aus den beiden Teil-Spritzlingen 8d, 8e zusammengesetzte, fertige Spritzling kann dann aus dem Mittelblock 5 ausgestoßen werden.

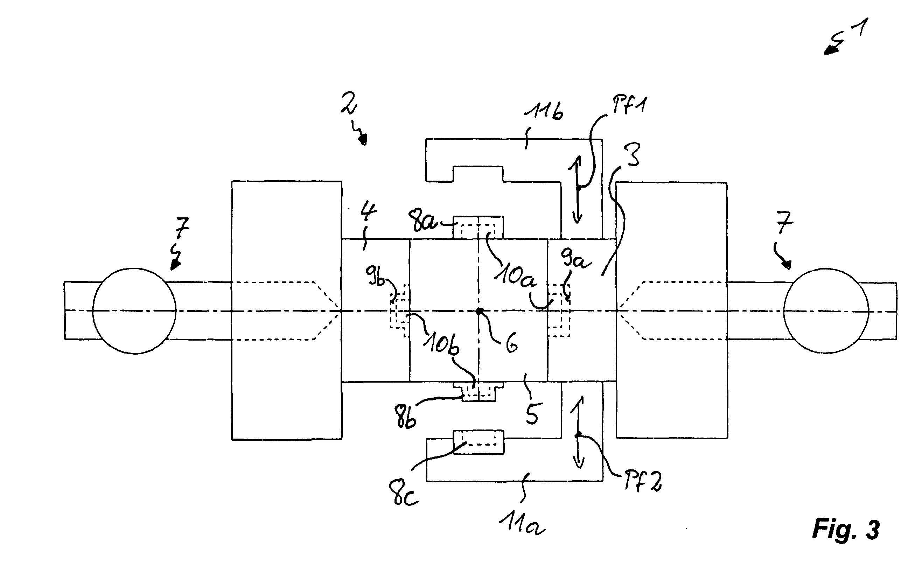

Nach diesen Bearbeitungsschritten können das bewegliche Außenformteil 4 und der Mittelblock 5 in ihre Offenstellung verfahren werden (Figur 2) und der Mittelblock 5 wird um 90° gegen den Uhrzeigersinn gedreht oder geschwenkt (Pfeil Pf3). Dadurch gelangt der zuvor gespritzte erste Teil-Spritzling 8a in den Bereich des oberen Greifers 11b (Figur 3) und kann nach oder gegebenenfalls auch bereits während dem Verstellen des Mittelblocks 5 und des beweglichen Außenformteils 4 in ihre Schließstellung mit dem Greifer 11b entnommen werden.

Im Bereich des unteren Greifers 11a, der noch den zuvor entnommenen ersten Teil-Spritzling 8c hält, befindet sich dann der zweite Teil-Spritzling 8b. Diese beiden Teil-Spritzlinge 8b, 8c können nun mit Hilfe des Greifers 11a miteinander verbunden (Pfeil Pf2) und der fertige Spritzling anschließend ausgestoßen werden.
An den beiden Außenformteilen 3, 4 werden währenddessen ein weiterer erster und zweiter Teil-Spritzling gespritzt.

Im Anschluss an die in Figur 3 gezeigte Bearbeitung wird der Mittelblock 5 in Offenstellung wieder um 90° in Uhrzeigerrichtung, also entgegen der vorigen Schwenkrichtung, verschwenkt, so dass sich wieder eine Situation entsprechend Figur 1 ergibt. Diese Bearbeitungszyklen werden kontinuierlich durchlaufen.

Durch das Verschwenken des Mittelblocks 5 um jeweils 90° in die eine oder die andere Richtung, also die oszillierende Bewegung des Mittelblocks 5, wird jeweils abwechselnd an einem der beiden Greifer 11a, 11b ein erster Teil-Spritzling entnommen und gehalten oder ein zuvor entnommener erster Teil-Spritzling mit einem am Mittelblock 5 bereitgestellten zweiten Teil-Spritzling verbunden. Währenddessen wird an den anderen Seiten des Mittelblocks 5 und den beiden Außenformteilen 3, 4 jeweils ein neuer Teil-Spritzling gespritzt.
Somit findet an allen vier Seiten des Mittelblocks 5 stets ein Bearbeitungsschritt statt, was eine hohe Produktivität mit sich bringt und ein schnelles Bearbeiten ermöglicht.

Mit Hilfe einer nicht dargestellten Zuführeinrichtung kann ein Zusatzelement an die Teil-Spritzlinge herangeführt werden, das beim Verbinden der Teil-Spritzlinge mit diesen verbunden wird und an oder ihn ihnen gehalten ist. Somit ist auch die Fertigung komplexerer Gegenstände möglich.

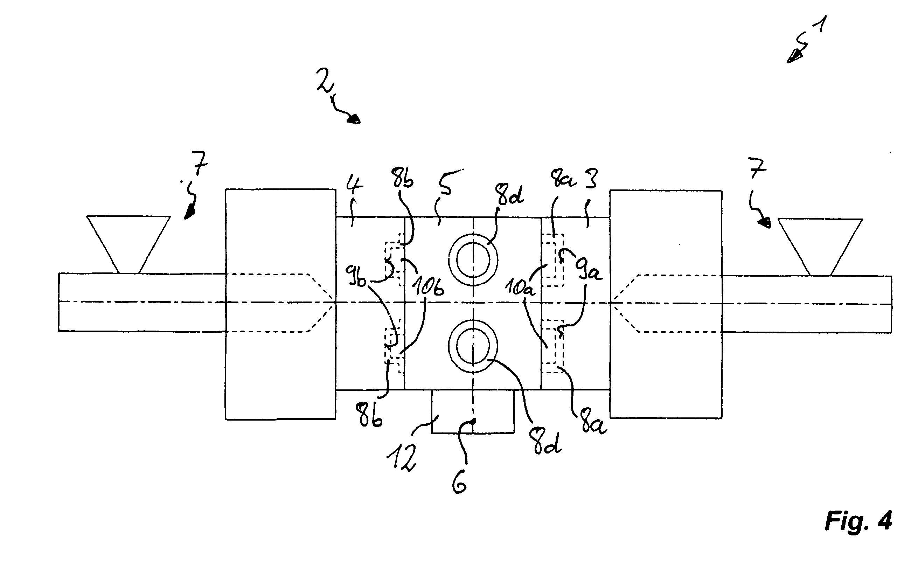

Figur 4 zeigt eine gegenüber Figur 1 um 90° gedrehte Seitenansicht der Spritzgießmaschine 1, wobei die Greifer aus Gründen der Übersichtlichkeit nicht dargestellt sind. In Figur 4 ist erkennbar, dass mehrere, in Richtung der Drehachse 6 des Mittelblocks 5 hintereinander angeordnete Bearbeitungsebenen vorgesehen sind. Der Mittelblock 5 weist demnach an seinen vier Seiten jeweils mehrere in Richtung seiner Drehachse 6 nebeneinander angeordnete Formgebungsbereiche 10a, 10b auf. Entsprechend sind die Außenformteile 3, 4 mit mehreren Formgebungsbereichen 9a, 9b ausgestattet. Innerhalb eines Bearbeitungszyklus' können so mehrere Teil-Spritzlinge gespritzt und zusammengefügt werden, wodurch die Produktionsgeschwindigkeit erhöht ist. Der konstruktive Mehr-Aufwand ist jedoch nur gering, insbesondere ist nur ein Drehantrieb 12 für den Mittelblock 5 erforderlich, ebenso verhält es sich mit den Linearantrieben für das bewegliche Außenformteil 4.

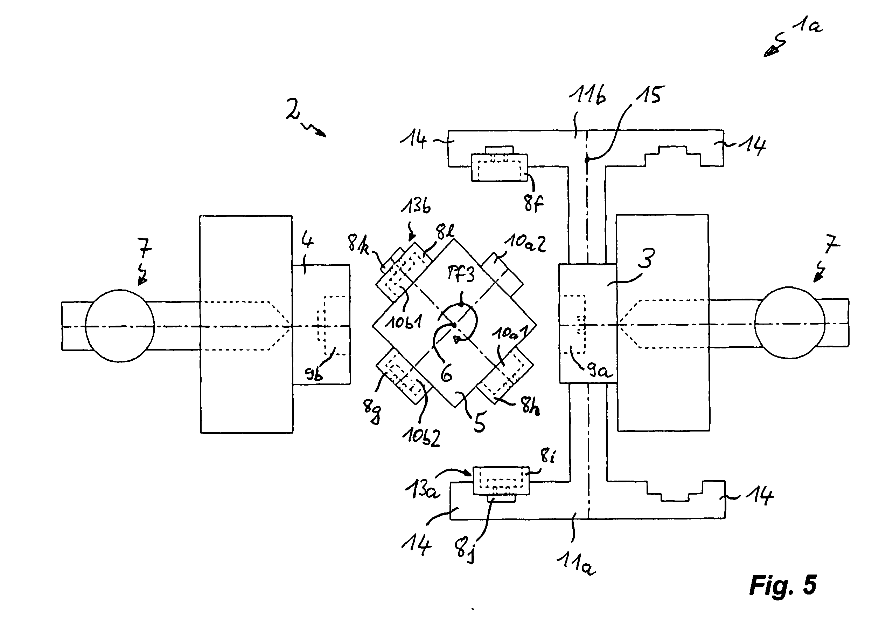

In den Figuren 5 bis 7 ist eine weitere Ausführungsform einer Spritzgießmaschine 1a gezeigt. Im Gegensatz zur Spritzgießmaschine 1 gemäß Figuren 1 bis 4, bei der erste und zweite Teil-Spritzlinge separat gespritzt und anschließend mechanisch miteinander verbunden werden, sind bei der Spritzgießmaschine 1a gemäß Figuren 5 bis 7 die Formgebungsbereiche 9b, 10b1, 10b2 für einen zweiten Teil-Spritzling zur Aufnahme eines ersten Teil-Spritzlinges ausgebildet, der beim Spritzen eines zweiten Teil-Spritzlinges umspritzt und so direkt beim Spritzen die Verbindung von erstem und zweitem Teil-Spritzling erreicht wird.

Figur 5 zeigt die Spritzgießmaschine 1a in Offenstellung beim Drehen des Mittelblocks 5 (Pf3). Ein zuvor in dem durch die Formgebungsbereiche 9a, 10a2 des festen Außenformteils 3 und des Mittelblocks 5 gebildeten Formhohlraum gespritzter erster Teil-Spritzling 8f wird von dem Greifer 11b gehalten. Ein weiterer, in einem vorhergehenden Arbeitszyklus gespritzer und von dem Greifer 11a entnommener erster Teil-Spritzling 8g ist bereits in den Formgebungsbereich 10b2 des Mittelblocks 5 eingesetzt worden und wird bei der in Figur 5 gezeigten Drehbewegung in Richtung zum beweglichen Außenformteil 4 und dessen Formgebungsbereich 9b für einen zweiten Teil-Spritzling bewegt. Ein weiterer erster Teil-Spritzling 8h, der im der gezeigten Situation direkt vorausgegangenen Zyklus in den Formgebungsbereichen 9a, 10a1 gespritzt wurde, befindet sich im Formgebungsbereich 10a1 des Mittelblocks 5 und wird zum Greifer 11a bewegt.
Der Greifer 11a hält einen Fertigspritzling 13a, der aus einem ersten Teil-Spritzling 8i und einem daran angespritzten zweiten Teil-Spritzling 8j gebildet ist. Dieser Fertigspritzling 13a kann aus dem Greifer 11a entnommen oder ausgeworfen werden. Da in der gezeigten Ausführungsform die Greifer 11a, 11b jeweils als Doppelgreifer mit jeweils zwei Greifarmen 14 ausgebildet sind, kann der Greifer 11a auch zunächst um 180° um die Drehachse 15 gedreht werden, so dass der Fertigspritzling 13a noch im Greifer 11a weiterbearbeitet werden kann, während der neu zugeführte erste Teil-Spritzling 8h von dem freien Greifarm 14 des Greifers 11a entnommen werden kann.

Nach dem Drehen des Mittelblocks 5 in die nächste Arbeitsposition und dem Schließen der Spritzgießmaschine 1a wird im Bereich des festen Außenformteils 3 in der durch die Formgebungsbereiche 9a und 10a2 gebildete Formhöhlung ein weiterer erster Teil-Spritzling gespritzt und im Bereich des beweglichen Außenformteils 4 wird in der durch die Formgebungsbereiche 9b und 10b2 gebildete Formhöhlung ein weiterer Fertigspritzling gebildet, indem ein zweiter Teil-Spritzling an den in der entsprechenden Formhöhlung angeordneten ersten Teil-Spritzling 8g angespritzt wird.

Der dort zuvor durch Anspritzen des zweiten Teil-Spritzlings 8k an den ersten Teil-Spritzling 81 gebildete Fertigspritzling 13b gelangt vor den Greifer 11b und kann von dessen freien Greifarm 14 entnommen oder einfach vom Mittelblock 5 ausgestoßen werden. Danach kann der an dem Greifer 11b gehaltene erste Teil-Spritzling 8f in den frei gewordenen Formgebungsbereich 10b1 des Mittelblocks 5 eingesetzt werden.

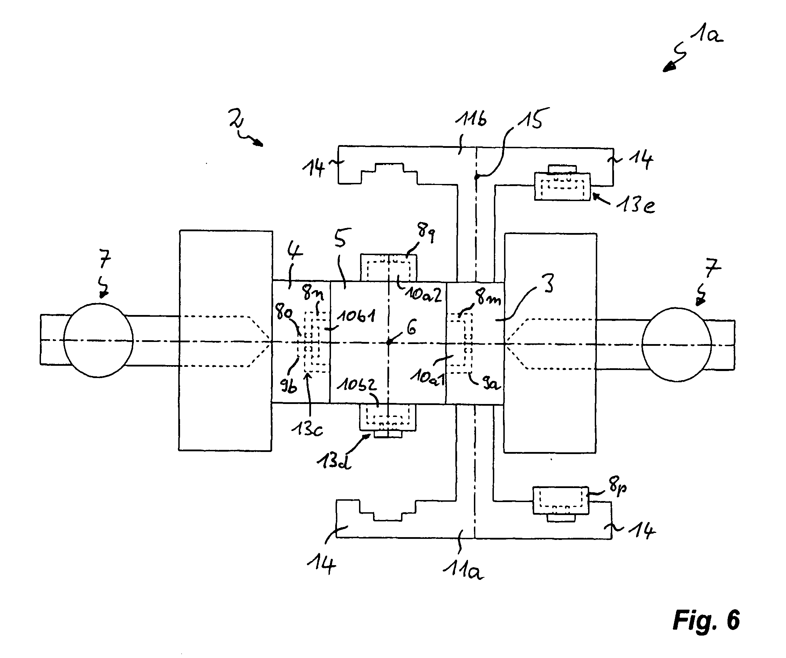

Figur 6 zeigt die Spritzgießmaschine 1a in einer Schließstellung. Im Bereich des festen Außenformteils 3 wird in der durch die Formgebungsbereiche 9a, 10a1 gebildeten Formhöhlung ein erster Teil-Spritzling 8m gespritzt, während im Bereich des beweglichen Außenformteils 4 an einen zuvor gespritzen ersten Teil-Spritzling 8n, der sich in der durch die Formgebungsbereiche 9b, 10b1 gebildeten Formhöhlung befindet, ein zweiter Teil-Spritzling 80 angespritzt und so der Fertigspritzling 13c gebildet wird.
Ein im vorigen Arbeitszyklus gespritzter Fertigspritzling 13d kann mit dem Greifer 11a von dem Mittelblock 5 entnommen werden. Ein zuvor gespritzter erster Teilspritzling 8p wurde bereits mit einem der Greifarme 14 des Greifers 11a von dem Mittelblock 5 entfernt und kann nach dem Entnehmen des Fertigspritzlings 13d in den Formgebungsbereich 10b2 für einen zweiten Teil-Spritzling des Mittelblocks 5 eingesetzt werden. In dieser Wartephase kann ein an einem der Greifer 11a, 11b gehaltener erster Teil-Spritzling einer weiteren Behandlung unterzogen, beispielsweise gekühlt oder mit ionisierter Luft beaufschlagt werden. Denkbar ist es auch, ein zusätzliches Teil, insbesondere klemmend oder klebend an den Teil-Spritzling anzubringen, das dann ebenfalls beim Spritzen des zweiten Teil-Spritzlings zumindest bereichsweise umspritzt wird.

An der gegenüberliegenden Seite des Mittelblocks 5 kann der zuvor gespritzte erste Teil-Spritzling 8q mit dem Greifer 11b entnommen werden, um ihn für das Einsetzen in den Formgebungsbereich 10b1 nach dem Öffnen des Etagenwerkzeugs 2 und Drehen des Mittelblocks 5 um 90° in Uhrzeigerrichtung bereitzuhalten.
Ein an dem zweiten Greifarm 14 des Greifers 11b gehaltener, zuvor vom Mittelblock 5 entnommener Fertigspritzling 13e kann ausgeworfen, an eine Weiterbearbeitungseinrichtung übergeben oder am Greifer 11b weiterbearbeitet, beispielsweise gekühlt, werden.

Wenn keine zusätzlichen Behandlungen der ersten Teil-Spritzlinge und der Fertigspritzlinge durchgeführt werden sollen, können die Greifer 11a, 11b auch jeweils wi in Figuren 1 bis 3 dargestellt als Einfachgreifer mit nur einem Greifarm ausgebildet sein, was die Konstruktion der Spritzgießmaschine 1a vereinfacht.

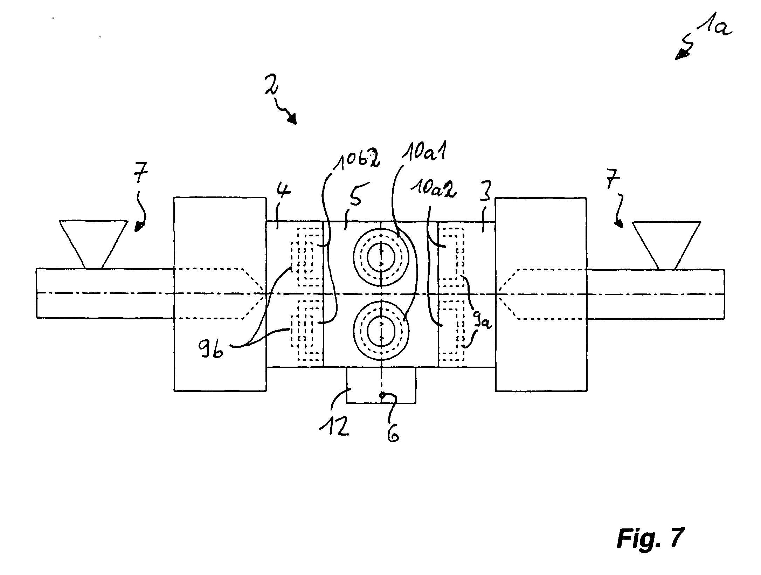

Figur 7 zeigt ähnlich wie Figur 4 eine um 90° gedrehte Seitenansicht der Spritzgießmaschine 1a ohne Darstellung der Greifer. Auch hier ist erkennbar, dass mehrere, in Richtung der Drehachse 6 des Mittelblocks 5 hintereinander angeordnete Bearbeitungsebenen vorgesehen sind. Innerhalb eines Bearbeitungszyklus' können so mehrere Teil-Spritzlinge gespritzt werden, wodurch die Produktionsgeschwindigkeit erhöht ist. Der konstruktive Mehr-Aufwand ist jedoch nur gering, insbesondere ist nur ein Drehantrieb 12 für den Mittelblock 5 erforderlich, ebenso verhält es sich mit den Linearantrieben für das bewegliche Außenformteil 4.

## Patentansprüche

1. Spritzgießmaschine (1) mit einem Etagenwerkzeug (2) zum Herstellen von Spritzlingen, das ein festes Außenformteil (3), einen dreh- oder schwenkbar gelagerten Mittelblock (5) sowie ein bewegliches Außenformteil (4) aufweist, wobei Formhöhlungen zwischen Formgebungsbereichen (9a, 9b) an den Innenseiten der Außenformteile (3, 4) und Formgebungsbereichen (10a, 10b) an gegenüberliegenden Außenseiten des Mittelblocks (5) gebildet sind, **dadurch gekennzeichnet, dass** der Mittelblock (5) an zwei in Dreh- oder Schwenkrichtung einander benachbarten Außenflächen Formgebungsbereiche (10a) für erste Teil-Spritzlinge (8a, 8c, 8e) und an den beiden anderen, einander benachbarten Außenflächen Formgebungsbereiche (10b) für zweite Teil-Spritzlinge (8b, 8d) aufweist, dass die beiden Außenformteile (3, 4) jeweils Formgebungsbereiche (9a, 9b) für einen der beiden Teil-Spritzlinge (8a,8b,8c,8d,8e) aufweisen, und dass in Dreh- oder Schwenkrichtung versetzt zu den Außenformteilen (3, 4) jeweils wenigstens ein Greifer (11a, 11b) zum Entnehmen und Halten eines Teil-Spritzlings (8a, 8c, 8e) und zum Positionieren eines zuvor entnommenen ersten Teil-Spritzlings (8a, 8c, 8e) an einem zweiten Teil-Spritzling (8b, 8d) zur Verbindung mit diesem oder zum Entnehmen und Halten eines Teil-Spritzlings (8f, 8g, 8h, 8i, 81) und zum Einsetzen eines zuvor entnommenen ersten Teil-Spritzlings (8f, 8g, 8h, 8i, 81) in einen Formgebungsbereich (10b1, 10b2) für zweite Teil-Spritzlinge (8j, 8k) des Mittelblocks (5) vorgesehen ist.

2. Spritzgießmaschine nach Anspruch 1, **dadurch gekennzeichnet, dass** eine Verbindungs-Vorrichtung zum Verbinden der beiden miteinander zu verbindenden Teil-Spritzlinge (8a,8b,8c,8d,8e) vorgesehen ist.

3. Spritzgießmaschine nach Anspruch 1 oder 2, **dadurch gekennzeichnet, dass** die Verbindungs-Vorrichtung zum Einbringen von Klebstoff in den Verbindungsbereich zwischen den beiden miteinander zu verbindenden Teil-Spritzlingen (8a,8b,8c,8d,8e) ausgebildet ist.

4. Spritzgießmaschine nach Anspruch 1 oder 2, **dadurch gekennzeichnet, dass** die Verbindungs-Vorrichtung zum Verschweißen der beiden miteinander zu verbindenden Teil-Spritzlinge (8a,8b,8c,8d,8e) ausgebildet ist.

5. Spritzgießmaschine nach einem der Ansprüche 1 bis 4, **dadurch gekennzeichnet, dass** eine Zuführeinrichtung zum Zuführen eines beim Verbinden der beiden Teil-Spritzlinge (8a,8b,8c,8d,8e) miteinander mit den Teil-Spritzlingen (8a,8b,8c,8d,8e) verbindbaren oder an diesen gehaltenen Zusatzelementes als drittes Teil-Element vorgesehen ist.

6. Spritzgießmaschine nach einem der Ansprüche 1 bis 5, **dadurch gekennzeichnet, dass** an jeder der Außenflächen des Mittelblocks (5) jeweils mehrere, in Querrichtung zur Drehachse (6) des Mittelblocks (5) nebeneinander angeordnete Formgebungsbereiche (10a,10b,10a1,10a2,10b1,10b2) für einen der beiden Teil-Spritzlinge (8a-8q) sowie an den beiden Außenformteilen (3,4) entsprechende, nebeneinander angeordnete Formgebungsbereiche (9a,9b) vorgesehen sind.

7. Spritzgießmaschine nach einem der Ansprüche 1 bis 6, **dadurch gekennzeichnet, dass** mehrere, in Richtung der Drehachse (6) des Mittelblocks (5) hintereinander angeordnete Bearbeitungsebenen vorgesehen sind.

8. Spritzgießmaschine nach einem der Ansprüche 1 bis 7, **dadurch gekennzeichnet, dass** Prüfeinrichtungen für die aus jeweils zwei Teil-Spritzlingen (8a-8q) zusammengesetzten Spritzlinge vorgesehen sind.

## Claims

1. Injection moulding machine (1) comprising a stack mould (2) for producing injection moulded parts, which stack mould has a fixed outer mould part (3), a rotatably or pivotally mounted central block (5) and a movable outer mould part (4), the mould cavities being formed between moulding regions (9a, 9b) on the inner surfaces of the outer mould parts (3, 4) and moulding regions (10a, 10b) on opposite outer surfaces of the central block (5), **characterised in that** the central block (5) comprises moulding regions (10a) for first partial moulded parts (8a, 8c, 8e) on two outer surfaces which are adjacent to one another in the direction of rotation or pivoting, and moulding regions (10b) for second partial moulded parts (8b, 8d) on the two other outer surfaces which are adjacent to one other, **in that** the two outer mould parts (3, 4) each comprise moulding regions (9a, 9b) for one of the two partial moulded parts (8a, 8b, 8c, 8d, 8e), and **in that** at least one gripper (11a, 11b) is provided in each case for removing and holding a partial moulded part (8a, 8c, 8e) and for positioning a previously removed first partial moulded part (8a, 8c, 8e) on a second partial moulded part (8b, 8d) to connect it thereto or for removing and holding a partial moulded part (8f, 8g, 8h, 8l, 8l) and for inserting a previously removed first partial moulded part (8f, 8g, 8h, 8i, 8l) into a moulding region (10b1, 10b2) for second partial moulded parts (8j, 8k) of the central block (5), the at least one gripper being offset in the direction of rotation or pivoting from the outer mould parts (3, 4).

2. Injection moulding machine according to claim 1, **characterised in that** a connection device is provided for connecting the two partial moulded parts (8a, 8b, 8c, 8d, 8e) which are to be interconnected.

3. Injection moulding machine according to either claim 1 or claim 2, **characterised in that** the connection device is formed for inserting adhesive into the connection region between the two partial moulded parts (8a, 8b, 8c, 8d, 8e) which are to be interconnected.

4. Injection moulding machine according to either claim 1 or claim 2, **characterised in that** the connection device is formed for welding the two partial moulded parts (8a, 8b, 8c, 8d, 8e) which are to be interconnected.

5. Injection moulding machine according to any one of claims 1 to 4, **characterised in that** a feeding means is provided for supplying an additional element which can be connected to or held on the partial moulded parts (8a, 8b, 8c, 8d, 8e) as a third partial element when interconnecting the two partial moulded parts (8a, 8b, 8c, 8d, 8e).

6. Injection moulding machine according to any one of claims 1 to 5, **characterised in that** a plurality of moulding regions (10a, 10b, 10a1, 10a2, 10b1, 10b2) for one of the two partial moulded parts (8a-8q), which moulding regions are arranged side by side in a transverse direction relative to the rotation axis (6) of the central block (5), are provided on each of the outer surfaces of the central block (5) respectively as well as corresponding moulding regions (9a, 9b) arranged side by side on the two outer mould parts (3, 4).

7. Injection moulding machine according to any one of claims 1 to 6, **characterised in that** a plurality of processing planes are provided which are arranged in succession in the direction of the rotation axis (6) of the central block (5).

8. Injection moulding machine according to any one of claims 1 to 7, **characterised in that** testing means are provided for the moulded parts which are each made up of two partial moulded parts (8a-8q).

## Revendications

1. Machine (1) de moulage par injection, équipée d'un outil étagé (2) qui est destiné à la production de pièces moulées par injection et comprend une partie extérieure de moulage (3) fixe, un bloc central (5) monté à rotation ou à pivotement, ainsi qu'une partie extérieure de moulage (4) mobile, des cavités de moulage étant formées entre des zones de conformation (9a, 9b), situées sur les faces intérieures desdites parties extérieures de moulage (3, 4), et des zones de conformation (10a, 10b) situées sur des faces extérieures opposées dudit bloc central (5), **caractérisée par le fait que** le bloc central (5) comprend des zones de conformation (10a) dévolues à des premières pièces partielles (8a, 8c, 8e) moulées par injection, sur deux surfaces extérieures voisines l'une de l'autre dans la direction de rotation ou de pivotement, et des zones de conformation (10b) dédiées à des secondes pièces partielles (8b, 8d) moulées par injection, sur les deux autres surfaces extérieures voisines l'une de l'autre ; **par le fait que** les deux parties extérieures de moulage (3, 4) sont pourvues, respectivement, de zones de conformation (9a, 9b) assignées à l'une des deux pièces partielles (8a, 8b, 8c, 8d, 8e) moulées par injection ; et **par le fait qu'**au moins un organe de préhension (11a, 11b) est respectivement prévu dans la direction de rotation ou de pivotement, avec décalage vis-à-vis desdites parties extérieures de moulage (3, 4), pour prélever et retenir une pièce partielle (8a, 8c, 8e) moulée par injection et pour positionner une première pièce partielle (8a, 8c, 8e) moulée par injection, préalablement prélevée, sur une seconde pièce partielle (8b, 8d) moulée par injection, en vue de la liaison avec cette dernière, ou bien pour prélever et retenir une pièce partielle (8f, 8g, 8h, 8i, 8l) moulée par injection et pour insérer une première pièce partielle (8f, 8g, 8h, 8i, 8l) moulée par injection, prélevée au préalable, dans une zone de conformation (10b1, 10b2) dudit bloc central (5) qui est affectée à des secondes pièces (8j, 8k) moulées par injection.

2. Machine de moulage par injection selon la revendication 1, **caractérisée par le fait qu'**un dispositif de liaison est prévu pour solidariser les deux pièces partielles (8a, 8b, 8c, 8d, 8e) moulées par injection, devant être reliées l'une à l'autre.

3. Machine de moulage par injection selon la revendication 1 ou 2, **caractérisée par le fait que** le dispositif de liaison est réalisé pour introduire un adhésif dans la zone de solidarisation située entre les deux pièces partielles (8a, 8b, 8c, 8d, 8e) moulées par injection, devant être reliées l'une à l'autre.

4. Machine de moulage par injection selon la revendication 1 ou 2, **caractérisée par le fait que** le dispositif de liaison est réalisé pour solidariser par soudage les deux pièces partielles (8a, 8b, 8c, 8d, 8e) moulées par injection, devant être reliées l'une à l'autre.

5. Machine de moulage par injection selon l'une des revendications 1 à 4, **caractérisée par le fait qu'**un système d'amenée est prévu pour délivrer un élément additionnel matérialisant un troisième élément partiel qui, lors de la liaison mutuelle des deux pièces partielles (8a, 8b, 8c, 8d, 8e) moulées par injection, peut être relié auxdites pièces partielles (8a, 8b, 8c, 8d, 8e) moulées par injection, ou est retenu sur ces dernières.

6. Machine de moulage par injection selon l'une des revendications 1 à 5, **caractérisée par le fait que** plusieurs zones respectives de conformation (10a, 10b, 10a1, 10a2, 10b1, 10b2), agencées en juxtaposition dans le sens transversal par rapport à l'axe de rotation (6) du bloc central (5) et dédiées à l'une des deux pièces partielles (8a-8q) moulées par injection, sont prévues sur chacune des surfaces extérieures dudit bloc central (5), des zones de conformation (9a, 9b) correspondantes, agencées en juxtaposition, étant pareillement prévues sur les deux parties extérieures de moulage (3, 4).

7. Machine de moulage par injection selon l'une des revendications 1 à 6, **caractérisée par** la présence de plusieurs plans d'intervention, agencés en succession dans la direction de l'axe de rotation (6) du bloc central (5).

8. Machine de moulage par injection selon l'une des revendications 1 à 7, **caractérisée par** la présence de systèmes de contrôle des pièces moulées par injection composées, à chaque fois, de deux pièces partielles (8a-8q) moulées par injection.
